# EUROPÄISCHE PATENTSCHRIFT

(11) **EP 3 562 618 B1**
(45) Veröffentlichungstag und Bekanntmachung des Hinweises auf die Patenterteilung: **21.12.2022**
(21) Anmeldenummer: 17849808.5
(22) Anmeldetag: 31.12.2017
(51) Int. Cl.: B23Q 7/04, B27M 1/08, B65G 35/06, B27C 3/04, B27C 9/04, B27M 3/18

(54) **TRANSPORTSYSTEM MIT SELBSTFAHRENDEN WERKSTÜCKWAGEN**
TRANSPORT SYSTEM HAVING SELF-PROPELLED WORKPIECE CARRIAGES
SYSTÈME DE TRANSPORT À CHARIOTS PORTE-PIÈCES AUTO-MOTEURS

(30) Priorität: 31.12.2016 DE 102016015584; 30.12.2017 DE 102017012077
(43) Veröffentlichungstag der Anmeldung: 06.11.2019
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2017/000436
(87) Internationale Veröffentlichungsnummer: WO 2018/121808

(56) Entgegenhaltungen:
- EP-A1- 2 281 671
- EP-A1- 2 796 257
- EP-A1- 3 315 270
- WO-A1-2014/177922
- GB-A- 2 492 347
- JP-A- H03 235 758

## Beschreibung

Die Erfindung betrifft ein Transportsystem mit selbstfahrenden Werkstückwagen, das zum einen über mindestens zwei voneinander unabhängigen Transportschienen verfügt und das zum anderen mindestens einen Werkstückwagen aufweist, der von den Transportschienen getragen und geführt ist. . Dabei weist das Transportsystem eine Drehscheibe auf, die dafür vorgesehen ist, die Werkstückwagen von einer der Transportschiene auf eine andere Transportschiene zu übergeben.

Aus der DE 10 2007 059 611 B4 ist ein Verfahren und eine Vorrichtung zum Transportieren von Objekten bekannt. Die Vorrichtung weist einen lang gestreckten Bahnkörper auf, der in viele kleinere Sektoren unterteilt ist und sowohl einen Anfang als auch ein Ende hat. Die endseitigen Sektoren sind um ihre Längsachse schwenkbar angeordnet. Alle Sektoren weisen sowohl an ihrer Oberseite als auch an ihrer Unterseite Transportschienen auf. In den Transportschienen sind eine Vielzahl von Transportwagen verschiebbar gelagert. Für den Warentransport bewegen sich die Transportwagen an den obenliegenden Transportschienen. Um die Transportwagen vom Ende des Bahnkörpers wieder zum Anfang zurückzuführen, werden Letztere im hinteren Sektor nach unten geschwenkt, um an der Unterseite des Bahnkörpers entlang wieder zum Anfang des Bahnkörpers zu gelangen. Am Anfang angekommen, werden sie wieder nach oben geschwenkt.

Die JP H03 235 758 A beschreibt ein Transportsystem gemäß dem Oberbegriff des Patentanspruchs 1 mit einer Vorrichtung zur Änderung der Fahrtrichtung eines Werkstücks mithilfe einer Drehscheibe. Dazu führt ein Transportwagen einer Magnetschwebebahn das Werkstück radial einer Drehscheibe zu, deren Welle ebenfalls tisch gelagert ist. An der Unterseite der Drehscheibe befindet sich eine Vorrichtung in der ein Werkstück eingehängt lagerbar ist.

Der vorliegenden Erfindung liegt die Problemstellung zugrunde, ein Transportsystem mit selbstfahrenden Werkstückwagen zu schaffen, bei dem mindestens ein Werkstückwagen platten- oder brettartige Werkstücke tragen und/oder führen.

Diese Problemstellung wird mit den Merkmalen des Hauptanspruchs gelöst. Dabei münden die jeweils benachbart liegenden Enden zweier Transportschienen des Transportsystems in die Drehscheibe, um die Werkstückwagen von der einen auf die andere Transportschiene umzusetzen. Die einzelne Drehscheibe hat eine Tragplatte, die zwei einander gegenüber angeordnete Drehscheibentragschienen aufweist und pro Drehscheibentragschiene Platz für mindestens einen Werkstückwagen hat.

Die selbstfahrenden Werkstückwagen können auch als Transportwagen für Werkzeuge oder andere Güter sein, die keine Werkstücke sind.

Weitere Einzelheiten der Erfindung ergeben sich aus den Unteransprüchen und der nachfolgenden Beschreibung mindestens einer schematisch dargestellten Ausführungsform.
- Figur 1:: perspektivische Ansicht der Bearbeitungsstation von vorn;
- Figur 2:: Stirnansicht eines Werkstücktransportsystems;
- Figur 3:: perspektivische Ansicht eines Umsetzers;
- Figur 4:: perspektivische Ansicht von schräg vorn eines Werkstückwagens;
- Figur 5:: wie Figur 4, jedoch von schräg hinten;

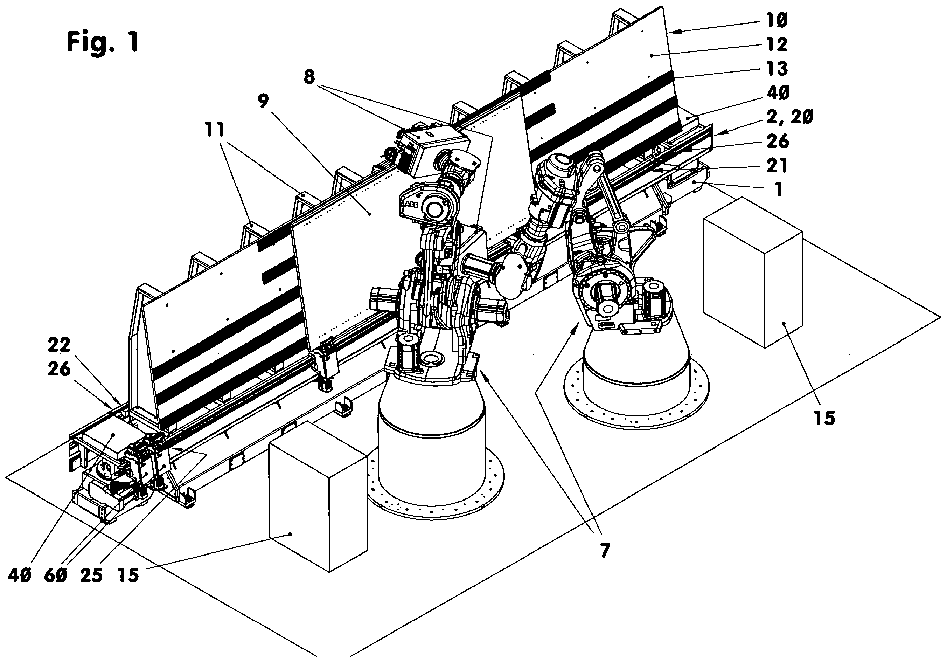

Die Figur 1 zeigt eine Bearbeitungsstation zum Bearbeiten von platten- und/oder brettartigen Werkstücken (9). Dazu hat die Bearbeitungsstation ein geradliniges langgestrecktes Maschinenbett (1), auf dem ein Werkstückstützgatter (10) aufgebaut ist. Um das Werkstückstützgatter (10) herum befindet sich ein Werkstücktransportsystem (2). Letzteres besteht aus zwei parallelen Transportschienen (21, 22), die jeweils endseitig vor Drehscheiben (40) enden. Auf der vor dem Werkstückstützgatter (10) gelegenen Transportschiene (21) bewegen sich - ggf. zu Gruppen zusammengefasste - selbstfahrende Werkstückwagen (60), die die Werkstücke (9) entlang dem Werkstückstützgatter (10) transportieren.

Das Werkstückstützgatter (10) dient zur Anlage der platten- oder brettförmigen Werkstücke, die beispielsweise aus Werkstoffen wie Holz, Spanplatten, Gipskartonagen, Faserzement oder dergleichen gefertigt sind. Zu diesen Werkstoffen zählen auch Verbundwerkstoffe und Aluminumlegierungen.

Gegenüber dem Werkstückstützgatter (10) und jenseits des Werkstücks (9) sind z.B. zwei Handhabungsgeräte (7) angeordnet, die jeweils eine Multifunktionseinheit (8) tragen und führen. Die Handhabungsgeräte (7) sind hier beispielsweise Gelenkroboter mit einer sogenannten RRR-Kinematik. Jede Multifunktionseinheit (8) weist eine Vielzahl gleichartiger und/oder verschiedener Werkzeuge auf, mit denen in das jeweilige Werkstück (9) Bohrungen, Ausnehmungen, Schlitze und dergleichen eingearbeitet werden können. Dazu werden die für einen Bearbeitungsschritt erforderlichen Werkzeuge, zum Beispiel eine Gruppe von vier Bohrern, pneumatisch aus der Multifunktionseinheit (8) ausgefahren, verriegelt und in Rotation versetzt. Mit rotierenden Bohrern wird nun die Multifunktionseinheit (8) in eine vorgewählte Position vor dem Werkstück (9) positioniert und ab dort geradlinig mittels des Handhabungsgeräts (7) gegen das Werkstück (9) verfahren, um die erforderliche Lochreihe zu fertigen. Am Ende des Bohrvorganges wird die Multifunktionseinheit (8) zurückgezogen. Zugleich werden die aktiven Bohrer unter Abschaltung ihrer Rotationsbewegung wieder eingefahren.

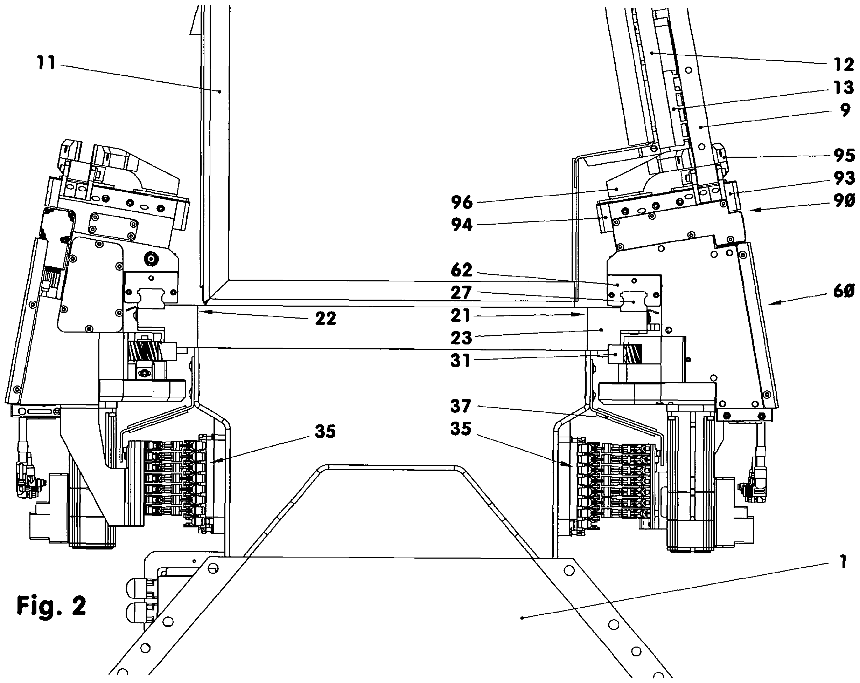

Die Figur 2 zeigt die vordere Stirnansicht des Werkstücktransportsystems (2). Es ist auf dem Maschinenbett (1) aufgebaut. Vorn und hinten am Maschinenbett sind Transportschienen (21, 22) befestigt. Sie bestehen jeweils aus einem formsteifen Tragwinkel (23), einer Tragschiene (27) und einer Zahnstange (31). Dabei sitzt die Tragschiene (27) auf dem Tragwinkel (23), während die Zahnstange (31) im unteren Bereich des Tragwinkels (23) befestigt ist. Unterhalb der Zahnstange (31) ist am Maschinenbett eine Mehrleiterstrom- und -signalschiene (35) montiert. Letztere ist im oberen Bereich mithilfe einer Stromschienenabdeckung (37) abgedeckt. Entlang dem Maschinenbett (1) können pro Seite der Tragwinkel (23), die Transportschiene (21, 22), die Zahnstange (31) und die Mehrleiterstrom- und -signalschiene (35) aus vielen Einzelstücken zusammengesetzt sein.

Selbstverständlich können die Werkstückwagen (60) über mitgeführte Energiespeicher betrieben werden. Letzterer ist beispielsweise ein Akkumulator, ein hochkapazitiver Kondensator oder eine Kombination aus beiden.

Neben oder anstelle der Verwendung eines Akkumulators kann der Werkstückwagen (60) über einen Empfänger, z.B. in Form einer Kopplungsspule, verfügen, die Teil einer drahtlosen Energieübertragung im Nachfeld darstellt. In einem Akkumulatorladebereich entlang oder parallel der Transportschienen (21, 22), z.B. auch auf einem Neben- oder Abstellgleis, werden als Sender einer Einspeisungsbaugruppe dienende Kopplungsspulen installiert, über denen der Werkstückwagen (60) mit seinem Empfänger für eine bestimmte Ladezeit abgestellt wird. Die beiden nahe beabstandeten Kopplungsspulen werden induktiv gekoppelt, wobei der vom Sender erzeugte magnetische Fluss in der empfängerseitigen Kopplungsspule eine Wechselspannung induziert. Die Wechselspannung wird gleichgerichtet einem werkstückwagenseitigen Laderegler zugeführt, der wiederum die Energiespeicher auflädt.

Im Ausführungsbeispiel sind beide Transportschienen (21) und (22) gleich lang und parallel zueinander orientiert. Ihre Oberkanten liegen außerdem in einer gemeinsamen Horizontalebene. An jedem Maschinenbettende enden zwei Transportschienenenden (25, 26) auf gleicher Höhe. Dort befindet sich nach Figur 1 jeweils eine Drehscheibe (40).

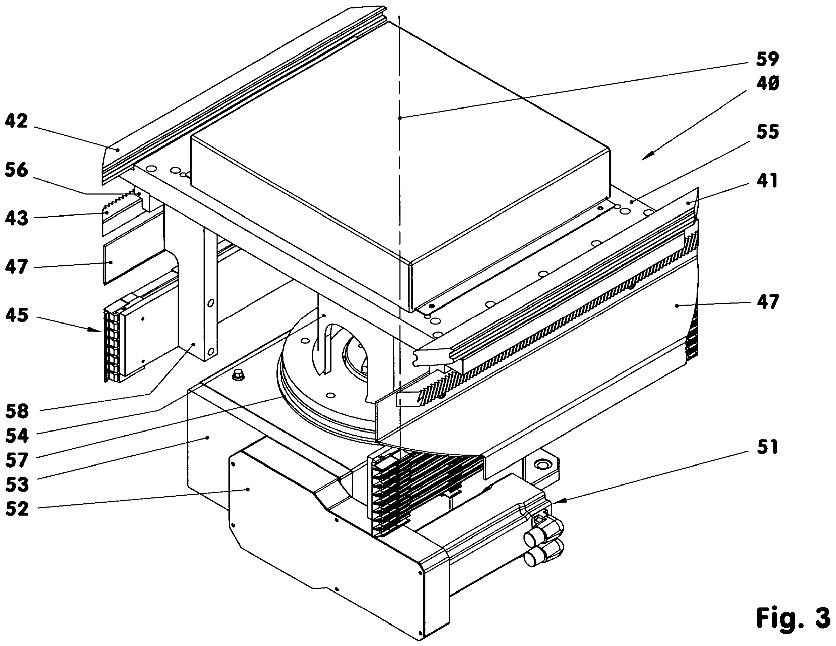

In Figur 3 ist die nach Figur 1 vordere Drehscheibe (40) dargestellt. Sie hat auf der Höhe der Tragwinkel (23) als drehbare Tischplatte eine Tragplatte (55). Auf zwei einander gegenüberliegenden Kanten der Tragplatte (55) ist jeweils eine Drehscheibentragschiene (41, 42) befestigt. Die beiden Drehscheibentragschienen (41, 42) haben genau den kürzesten Abstand, den auch die Tragschienen (27) der geradlinigen Transportschienen (21, 22) haben. Unterhalb der Tragplatte (55) sind die Drehscheibenzahnstange, die Mehrleiterstrom- und -signalschiene (45) und die Stromschienenabdeckung (47) genau in der Weise angeordnet, wie das auch bei den geradlinigen Transportschienen (21, 22) der Fall ist.

Die Tragplatte (55) ruht über einen Rohrflansch (54) auf dem wälzgelagerten Drehtisch (57) eines Lagergehäuses (53). Das Lagergehäuse wiederum ist auf dem Maschinenbett (1) aufgeschraubt, vgl. Figur 1. Im Lagergehäuse befindet sich z.B. ein den Drehtisch antreibendes Winkelgetriebe, das beispielsweise über ein externes Zugmittelgetriebe (52) mit einem am Lagergehäuse (53) befestigten, elektrisch angetriebenen Drehscheibenmotor (51) antreibbar verbunden ist.

An der Unterseite der Tragplatte (55) befindet sich im Bereich unterhalb der Drehscheibentragschienen (41, 42) jeweils eine winkelförmige Zahnstangentragschiene (56), an der die Drehscheibenzahnstange (43) befestigt ist. Jeweils hinter jeder Zahnstangentragschiene sind zwei Schienenstützen (58) angeordnet, die nach unten ragen. An je zwei Schienenstützen (58) sind die Mehrleiterstrom- und -signalschienen (45) sowie die Stromschienenabdeckungen (47) befestigt.

Um die Werkstückwagen (60) problemlos von einer Transportschiene (21, 22) auf die andere Transportschiene (22, 21) übergeben zu können, sind auch die Drehscheibentragschienen (41, 42), die Drehscheibenzahnstangen (43) und die Mehrleiterstrom- und -signalschienen (45) des Umsetzers (40) stirnseitig so abgeschrägt, dass die freien Stirnseiten dieser Bauteile zylindermantelförmig gekrümmt sind, wobei die Mittellinie zum Flächenteil des Zylindermantels die Schwenkachse (59) der Drehscheibe (40) ist. Die Tragschienen (27), die Zahnstangen (31) und die Mehrleiterstrom- und -signalschienen (35) der Transportschienen (21, 22) haben entsprechend konkav angepasste Stirnflächen. Der zwischen den einander gegenüberliegenden Stirnflächen vorhandene Spalt hat eine Spaltbreite von 0,1-0,3 mm.

Der Durchmesser des gedachten Zylindermantels, auf dem die Stirnflächen der Tragschienen (41, 42) und der Zahnstangen (43) liegen, dessen Mittellinie auf der Schwenkachse (59) liegt, ist größer als der kürzeste zwischen den Tragschienen (27) gelegene Abstand.

Um nun einen Werkstückwagen (60) beispielsweise von der hinteren Transportschiene (22) auf die vordere Transportschiene (21) umzusetzen, fährt der Werkstückwagen (60) nach Figur 1 auf die hintere Drehscheibentragschiene (42) auf. Nun dreht sich die Drehscheibe um ihre Schwenkachse (59) um 180 Winkelgrade. Von dort aus fährt der Werkstückwagen (60) auf die Transportschiene (21) auf. Hat der Werkstückwagen (60) nach dem Durchlaufen der Bearbeitungsstation das hintere Ende der Transportschiene (21) erreicht, fährt er auf die Drehscheibentragschiene (42) der hinteren Drehscheibe (40), um mit deren Hilfe auf die rückseitige Transportschiene (22) umgesetzt zu werden.

Demnach fährt jeder Werkstückwagen (60) innerhalb des Werkstücktransportsystems (2) quasi im Kreis herum. Wenn die Winkelgeschwindigkeit der Drehscheibe (40) auf die Fahrgeschwindigkeit des einzelnen Werkstückwagens (60) eingestellt ist - also die Drehscheibenumfangsgeschwindigkeit auf der Höhe der Tragschiene (41, 42) der Fahrgeschwindigkeit des Werkstückwagens (60) entspricht - umrundet der Werkstückwagen (60) ohne merkliche Geschwindigkeitsunterbrechung durch die Drehscheiben (40) den Transportweg des vorliegenden Einschienentransportsystems (2).

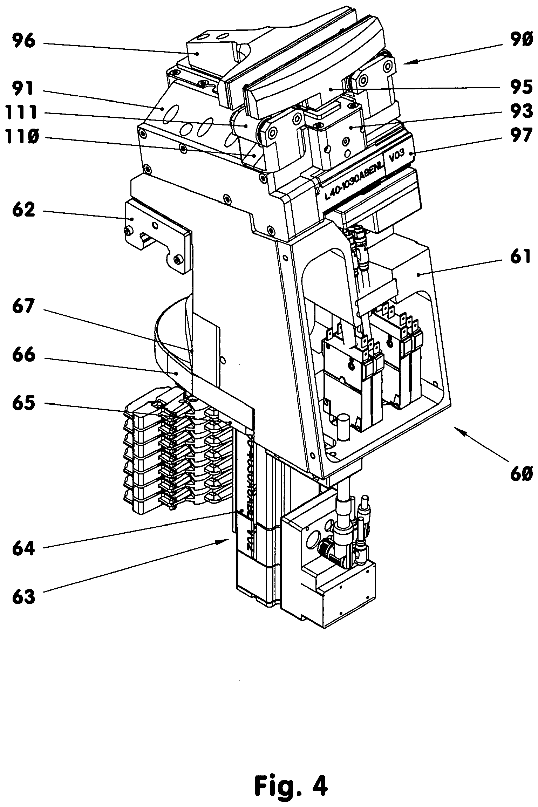

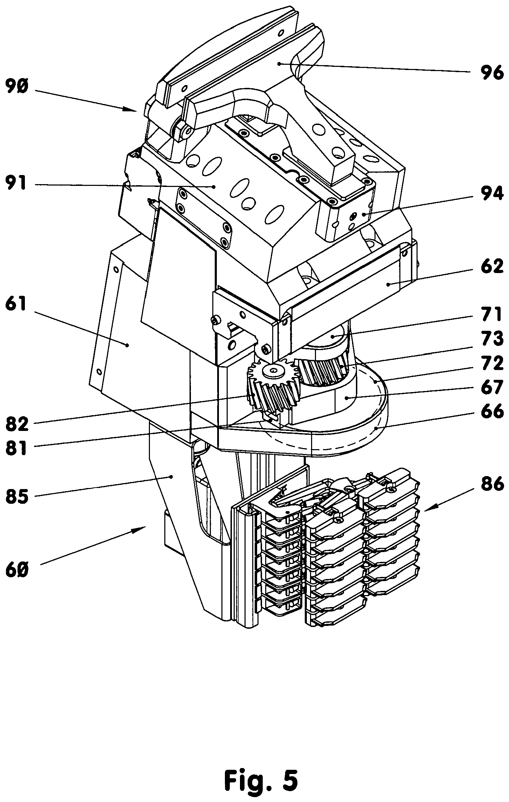

Die Figuren 4 und 5 zeigen einen Werkstückwagen (60) von der Vorder- und der Rückseite. Das zentrale Bauteil des Werkstückwagens (60) ist der winkelförmig gestaltete Grundkörper (61). Unterhalb der Auskragung des Grundkörpers (61) ist ein Führungswagen (62) angeordnet. Der Führungswagen (62) ist ein Kugelumlaufschuh, der die Tragschienen (27, 41, 42) in den vertikalen Richtungen und in den Seitenrichtungen wälzgelagert umgreift.

Nach Figur 5 befindet sich unterhalb des Führungswagens (62) eine Nebenwelle (71), die das schräg verzahnte Abtriebsrad (73) trägt. Die Nebenwelle (71), die in einem Lagerbock (67) wälzgelagert gelagert ist, hat ein - gestrichelt dargestelltes - Antriebsrad (72), das von einem am Grundkörper (61) angeformten Getriebegehäuse (66) nach außen hin umschlossen ist. Unterhalb des Getriebegehäuses (66) sitzt eine Flanschplatte (65), an der ein Fahrantrieb (63) adaptiert ist. Letzterer ist beispielsweise ein nach unten ragender Servomotor (64) mit einem ggf. integrierten Getriebe. Auf der Welle des Servomotors (64) sitzt ein geradverzahntes - hier nicht dargestelltes - Ritzelrad, das mit dem Antriebsrad (72) der Nebenwelle (71) kämmt.

An der Unterseite des Grundkörpers (61) ist neben dem Fahrantrieb (63) ein nach unten ragender Abnehmerkragarm (85), ein Blechbauteil, angeordnet. An ihm sind die Strom- und Signalabnehmer (86) federnd befestigt. Im vorliegenden Fall werden sieben Abnehmer (86) verwendet. Der oberste ist z.B. an Masse angeschlossen. Die nächsten beiden Stromabnehmer (86) führen +48 V und -48 V bei z.B. 10 A Strom. Der vierte und fünfte Abnehmer sind jeweils ein Stromabnehmer (86) für +24 V und -24 V bei 5 A Strom. Die beiden unteren Abnehmer (86) sind Signalabnehmer für den z.B. hier verwendeten CAN-Bus.

Nach Figur 5 ist im Abstand von mehreren Millimetern neben dem Abtriebsrad (73) ein sogenanntes Schmierrad (82) im Abstand von einigen Millimetern angeordnet. Das Schmierrad (82), das nicht mit dem Abtriebsrad (73) kämmt, ist am Lagerbock (67) über eine Schmierradachse (81) gelagert. Es ist im Ausführungsbeispiel ein Filzrad, das extern im Bereich der Zahnstangen (31, 43) - an einer oder an mehreren Stellen - jeweils mit Hilfe eines Kleinmengenschmiermittelölers mit Schmieröl benetzt wird. Das Filzrad (82) wälzt permanent an den Zahnstangen (31, 43) ab und verteilt so Schmiermittel auf den schrägverzahnten Zahnstangen (31, 43) .

Anstelle des Filzrades (82) kann auch ein gesintertes bzw. zumindest bereichsweise poröses Metall-, Keramik- oder Kunststoffrad verwendet werden, das über die Schmierradachse (81) aus dem Grundkörper (61) des Werkstückwagens (60) heraus, z.B. in regelmäßigen Zeitabständen, mit Drucköl versorgt wird. Das Drucköl tritt bei dieser Variante im mittleren Bereich der Zahnflanken des Schmierrads (82) aus, um so beim Abwälzen auf die Zahnflanken der Zahnstangen übertragen zu werden. Der Öldruck des im Grundkörper (61) eingelassenen Schmiermitteltanks kann dabei durch eine kleine Pumpe, die über die Rotation des Schmierrades (82) angetrieben wird, erzeugt werden.

Gemäß der Figuren 4 und 5 sitzt auf dem Grundkörper (61) des Werkstückwagens (60) eine z.B. elektromechanisch betätigbare Spannzange (90). Im Zangengehäuse (91) ist ein Schieber mit zwei Kulissenausnehmungen angeordnet. Der Schieber - hier nicht dargestellt - wird über einen elektrisch angetriebenen Kulissenantrieb zum Öffnen und Schließen der Spannzange (90) verfahren. Jede Kulissenausnehmung hat eine andere Steigung.

Oberhalb des Schiebers sitzen quer zum Führungswagen (62) hintereinander im Zangengehäuse (91) zwei Schlitten (93, 94). Jeder Schlitten (93, 94) ist über einen Zapfen mit einer der Kulissenausnehmungen des Schiebers verbunden. Des Weiteren trägt jeder Schlitten auf seiner Oberseite ein Greifelement (95, 96). Das in Figur 5 vordere Greifelement (96) legt sich nach Figur 2 an der Rückseite des plattenförmigen Werkstücks (9) über einen nur kurzen Hub an. Dazu hat die unter dem Schlitten (94) gelegene Kulissenausnehmung nur eine geringe Steigung. Das nach Figur 4 vordere Greifelement (95), das auf dem Schlitten (93) befestigt ist, hat die Aufgabe, ein auf dem Werkstückwagen (60) aufgesetztes Werkstück (9) nicht nur zu greifen, sondern auch gegen das Werkstückstützgatter (10) und das Greifelement (96) zu ziehen. Dafür ist ein großer Hub erforderlich. Also hat hier die Kulissenausnehmung im Schlitten eine große Steigung.

Die Spannzange (90) hat unterhalb der seitlichen Auskragungen der Greifelemente jeweils einen Lagerbock (110). Jeder Lagerbock (110) weist nach Figur 4 zwei nebeneinanderliegende Rollen (111) auf. Diese Rollen (111), die wälz- oder gleitgelagert im jeweiligen Lagerbock (110) gelagert sind, nehmen die Werkstücklast auf.

Nach Figur 2 wird die Gewichtslast des Werkstückes (9) rechts neben dem Zentrum des Führungswagens (62) eingeleitet. Dadurch entsteht um die Tragschiene (27) herum ein in Uhrzeigerdrehrichtung wirkendes Drehmoment, das den Werkstückwagen (60) stabilisierend mit seinem Abtriebsrad (73) und seinen Strom- und Signalabnehmern (86) gegen die Transportschiene (21) presst.

Kombinationen der in den Figuren gezeigten Ausführungsbeispiele sind denkbar.

### Bezugszeichenliste:

- 1: Maschinenbett
- 2: Werkstücktransportsystem, Einschienentransportsystem
- 7: Handhabungsgeräte
- 8: Multifunktionseinheiten, werkzeugtragend
- 9: Werkstück, platten- und/oder brettartig

- 10: Werkstückstützgatter
- 11: Stützen, groß
- 12: Anlehnplatten, Anlehnleisten
- 13: Bürstenreihen
- 15: Einheitsablagestellen für (8)

- 20: Schienensystem
- 21, 22: Transportschienen, Schienen
- 23: Tragwinkel
- 25, 26: Enden der Transportschienen
- 27: Tragschienen
- 31: Zahnstangen
- 35: Mehrleiterstrom- und -signalschienen
- 37: Stromschienenabdeckung

- 40: Drehscheibe, Umsetzer
- 41, 42: Drehscheibentragschienen, Tragschienen
- 43: Drehscheibenzahnstange, Zahnstangen
- 45: Mehrleiterstrom- und -signalschienen
- 47: Stromschienenabdeckung

- 51: Drehscheibenmotor
- 52: Getriebe, Zugmittelgetriebe
- 53: Lagergehäuse
- 54: Rohrflansch
- 55: Tragplatte, Tischplatte, drehbar
- 56: Zahnstangentragschiene, winkelförmig
- 57: Drehtisch, wälzgelagert
- 58: Schienenstützen, nach unten ragend
- 59: Schwenkachse

- 60: Werkstückwagen, selbstfahrend; Transportwagen
- 61: Grundkörper, winkelförmig
- 62: Führungswagen, Kugelumlaufschuh
- 63: Fahrantrieb
- 64: Motor, ggf. mit integriertem Getriebe, Servomotor
- 65: Flanschplatte
- 66: Getriebegehäuse, plattenförmig
- 67: Lagerbock mit zwei Wälzlagern

- 71: Antriebswelle, Nebenwelle
- 72: Antriebsrad, groß, unten
- 73: Abtriebsrad, klein, oben

- 81: Schmierradachse, an Getriebegehäuse
- 82: Schmierrad, Filzrad

- 85: Abnehmerkragarm, Blechbauteil
- 86: Strom- und Signalabnehmer, federnd; Abnehmer

- 90: Spannzange
- 91: Zangengehäuse
- 93, 94: Schlitten
- 95, 96: Greifelemente

- 97: Kulissenantrieb, Servomotor, Getriebemotor
- 110: Lagerböcke
- 111: Rollen

## Patentansprüche

1. Transportsystem mit selbstfahrenden Werkstückwagen (60), das zum einen über zwei voneinander unabhängigen parallelen Transportschienen (21, 22) verfügt und das zum anderen mindestens einen Werkstückwagen (60) aufweist, der von den Transportschienen (21, 22) getragen und geführt ist, wobei das Transportsystem eine Drehscheibe (40) aufweist, die dafür vorgesehen ist, die Werkstückwagen (60) von einer der Transportschienen (21, 22) auf eine andere Transportschiene (22, 21) zu übergeben, **dadurch gekennzeichnet,**
- **dass** die jeweils benachbart liegenden Enden (25, 26) zweier Transportschienen (21, 22) des Transportsystems in die Drehscheibe (40) münden, um die Werkstückwagen (60) von der einen (21, 22) auf die andere Transportschiene (21, 22) umzusetzen und
- wobei die einzelne Drehscheibe (40) eine Tragplatte (55) aufweist, die zwei einander gegenüber angeordnete Drehscheibentragschienen (41, 42) aufweist und pro Drehscheibentragschiene (41, 42) Platz für mindestens einen Werkstückwagen (60) hat.

2. Transportsystem gemäß Anspruch 1, **dadurch gekennzeichnet, dass** die einzelne Transportschiene (21, 22) eingleisig gestaltet ist, wobei die Transportschiene (21, 22) mindestens aus einer obenliegenden Tragschiene (27) und einer unterhalb dieser angeordneten Zahnstange (31) besteht.

3. Transportsystem gemäß Anspruch 1, **dadurch gekennzeichnet, dass** die einzelne Transportschiene (21, 22) eine Mehrleiterstrom- und -signalschiene (35) aufweist.

4. Transportsystem gemäß Anspruch 1, **dadurch gekennzeichnet, dass** die einzelne Drehscheibe (40) zusammen mit den benachbarten Enden (25, 26) der Transportschienen (21, 22) in einer Ebene liegt, wobei die Schwenkachse (59) der Drehscheibe (40) senkrecht zu dieser Ebene orientiert ist.

5. Transportsystem gemäß Anspruch 1, **dadurch gekennzeichnet, dass** die Tragplatte (55) mit den obenliegenden Drehscheibentragschienen (41, 42) eine untenliegende Mehrleiterstrom- und -signalschiene (45) hat.

6. Transportsystem gemäß Anspruch 1, **dadurch gekennzeichnet, dass** der einzelne Werkstückwagen (60) die Transportschiene (21, 22) quer zur Verfahrrichtung in den beiden Seitenrichtungen und in und gegen die Schwerkraftrichtung wälzgelagert umgreift, wobei der Schwenkfreiheitsgrad um einen in Verfahrrichtung weisenden Vektor blockiert ist.

7. Transportsystem gemäß Anspruch 1, **dadurch gekennzeichnet, dass** der einzelne Werkstückwagen (60) eine elektromechanisch betätigbare Spannzange (90) aufweist, wobei die Spannzange (90) zwei einander gegenüberliegende Greifelemente (95, 96) hat, die unterschiedliche Hübe haben.

## Claims

1. Transport system having self-propelled workpiece carriages (60), which on the one hand has at least two transport rails (21, 22), which are parallel and independent of one another, and on the other hand at least one workpiece carriage (60) which is carried and guided by the transport rails (21, 22), wherein the transport system includes a turntable (40) which is provided for the purpose of transferring the workpiece carriages (60) from one of the transport rails (21, 22) to another transport rail (21, 22), **characterized in that**
- the respective adjacent ends (25, 26) of two transport rails (21, 22) of the transport system lead into the turntable (40) to enable the workpiece carriages (60) to be transferred from the one transport rail (21, 22) to the other transport rail (21, 22), and
- wherein the single turntable (40) includes a support plate (55) which has two turntable support rails (41, 42) arranged opposite one another, and space for at least one workpiece carriage (60) on each turntable support rail (41, 42).

2. Transport system according to Claim 1, **characterized in that** the individual transport rail (21, 22) is designed as a single track, wherein the transport rail (21, 22) consists of at least one upper support rail (27) and one toothed rack (31) arranged below it.

3. Transport system according to Claim 1, **characterized in that** the individual transport rail (21, 22) has a multi-conductor rail (35) for current and signals.

4. Transport system according to Claim 1, **characterized in that** the single turntable (40) lies in one plane together with the adjacent ends (25, 26) of the transport rails (21, 22), wherein the slewing axis (59) of the turntable (40) is orientated perpendicularly to said plane.

5. Transport system according to Claim 1, **characterized in that** the support plate (55) with the upper turntable support rails (41, 42) has a multi-conductor rail (45) for current and signals below it.

6. Transport system according to Claim 1, **characterized in that** the single workpiece carriage (60) clasps the transport rail (21, 22) with the aid of anti-friction bearings in both lateral directions transversely to the direction of travel and in and counter to the direction of gravity, wherein the slewing degree of freedom is blocked about a vector aligned in the direction of travel.

7. Transport system according to Claim 1, **characterized in that** the single workpiece carriage (60) is equipped with an electromechanically actuatable collet chuck (90), wherein the collet chuck (90) has two gripping elements (95, 96) which are disposed opposite each other and have different travel paths.

## Revendications

1. Système de transport, pourvu de chariots porte-pièce (60) automoteurs, qui d'une part, dispose de deux rails de transport (21, 22) parallèles, indépendants l'un de l'autre et d'autre part, comporte au moins un chariot porte-pièce (60), qui est porté et guidé par les rails de transport (21, 22), le système de transport comportant une plaque tournante (40) qui est prévue pour transférer les chariots porte-pièce (60) de l'un des rails de transport (21, 22) sur un autre rail de transport (22, 21),
**caractérisé,**
- **en ce que** les extrémités (25, 26) situées en étant respectivement voisines de deux rails de transport (21, 22) du système de transport débouchent dans la plaque tournante (40), pour transposer les chariots porte-pièce (60) de l'un (21, 22) sur l'autre rail de transport (21, 22) et
- la plaque tournante (40) individuelle comportant une plaque porteuse (55) qui comporte deux rails de support de plaque tournante (41, 42), placés en vis-à-vis et qui a pour chaque rail de support de plaque tournante (41, 42) de la place pour au moins un chariot porte-pièce (60).

2. Système de transport selon la revendication 1, **caractérisé en ce que** le rail de transport (21, 22) individuel est conçu à voie unique, le rail de transport (21, 22) étant constitué d'au moins un rail de support (27) en partie haute et d'une crémaillère (31) placée sous celui-ci.

3. Système de transport selon la revendication 1, **caractérisé en ce que** le rail de transport (21, 22) individuel comporte une barre bus multiconducteurs d'alimentation et de signalisation (35).

4. Système de transport selon la revendication 1, **caractérisé en ce que** la plaque tournante (40) individuelle se situe dans un plan, en commun avec les extrémités (25, 26) voisines des rails de transport (21, 22), l'axe de pivotement (59) de la plaque tournante (40) étant orienté à la perpendiculaire dudit plan.

5. Système de transport selon la revendication 1, **caractérisé en ce que** la plaque porteuse (55) a avec les rails de support de plaque tournante (41, 42) en partie haute une barre bus multiconducteurs d'alimentation et de signalisation (45) en partie basse.

6. Système de transport selon la revendication 1, **caractérisé en ce que** le chariot porte-pièce (60) individuel entoure le rail de transport (21, 22) à la transversale de la direction de déplacement dans les deux directions latérales et en étant logé sur des roulements, à l'encontre de la direction de la pesanteur, le degré de liberté de pivotement autour d'un vecteur dirigé dans la direction de déplacement étant bloqué.

7. Système de transport selon la revendication 1, **caractérisé en ce que** le chariot porte-pièce (60) individuel comporte une pince de serrage (90) à actionnement électromécanique, la pince de serrage (90) ayant deux éléments de préhension (95, 96) mutuellement en vis-à-vis qui présentent des courses différentes.
